(19) Europäisches Patentamt
European Patent Office
Office européen des brevets

(11) **EP 1 600 770 A1**

(12) **EUROPEAN PATENT APPLICATION**
published in accordance with Art. 158(3) EPC

(43) Date of publication:
**30.11.2005 Bulletin 2005/48**

(51) Int Cl.⁷: **G01N 29/10**, G01N 23/18, G01N 27/82

(21) Application number: **04716368.8**

(22) Date of filing: **02.03.2004**

(86) International application number:
**PCT/JP2004/002582**

(87) International publication number:
**WO 2004/079361 (16.09.2004 Gazette 2004/38)**

(84) Designated Contracting States:
**AT BE BG CH CY CZ DE DK EE ES FI FR GB GR HU IE IT LI LU MC NL PL PT RO SE SI SK TR**
Designated Extension States:
**AL LT LV MK**

(30) Priority: **06.03.2003 JP 2003060279**

(71) Applicant: **Tohoku Techno Arch Co., Ltd.**
**Sendai-shi, Miyagi 980-0845 (JP)**

(72) Inventors:
• **SAKA, Masumi**
  **Sendai-shi, Miyagi 989-3204 (JP)**
• **SHOUJI, Tetsuo**
  **Sendai-shi, Miyagi 981-0967 (JP)**

(74) Representative: **Weber, Dieter et al**
**Weber, Seiffert, Lieke**
**Postfach 61 45**
**65051 Wiesbaden (DE)**

(54) **QUANTITATIVE NONDESTRUCTIVE EVALUATION METHOD FOR CRACKING**

(57) A nondestructive evaluation method for detecting cracking (5) in a metal tube body (1) by specified inspection devices (6) and (7), wherein a cooling treatment, a heating treatment, or a cooling and heating treatment is applied to the specified position of the tube body (1) to cause deformation so as to open the cracking (5) present in the tube body (1) for elicitation. Then the tube body (1) is inspected by using the inspection devices (6) and (7).

Fig. 1

## Description

FIELD OF ART

The present invention relates to a nondestructive evaluation method for the detection of cracking in a metallic pipe with use of ultrasonic wave or X-ray or electromagnetic techniques.

BACKGROUND OF ART

Metallic pipes used for example in power plants, aircraft and ships, as well as welded portions of the pipes, may undergo cracking as they are used over many years. Since the tip of such cracking is sharp, there occurs a stress concentration at the tip, and if the cracked pipe is left standing, there may occur destruction of the pipe. To avoid this inconvenience, methods for detecting cracking or evaluating the size of cracking with use of various inspection devices have heretofore been developed. For example, there is known a method wherein ultrasonic wave is applied to a position to be inspected of a welded portion or the like of a pipe and cracking is detected or the size thereof is evaluated on the basis of the size of a reflected echo (see, for example, Patent Literature 1).

There also is known a method wherein X-ray is applied to an object and the X-ray passing through the object is photographed with a camera to obtain an image of cracking or the like (see, for example, Patent Literature 2).

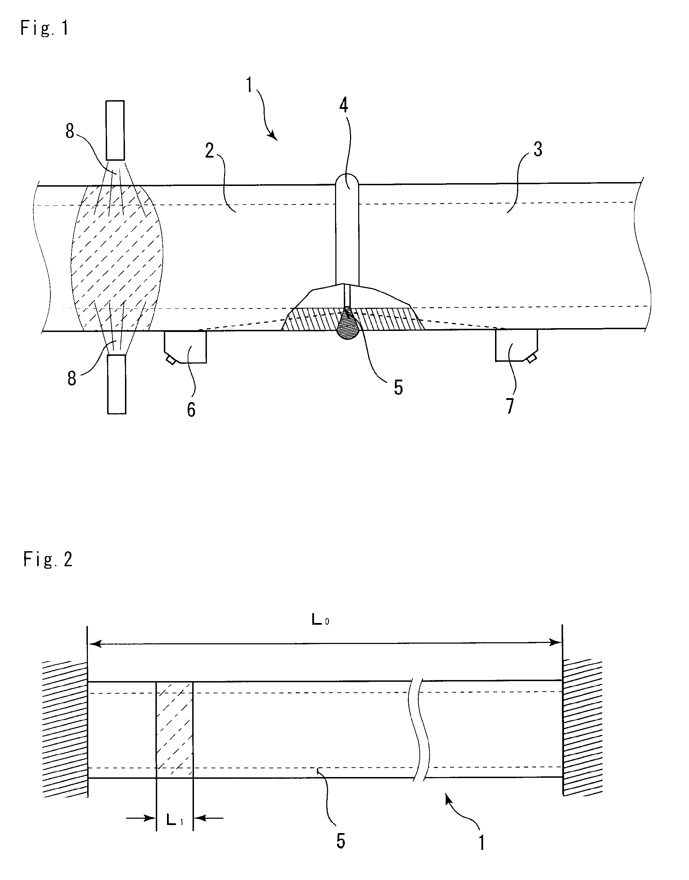

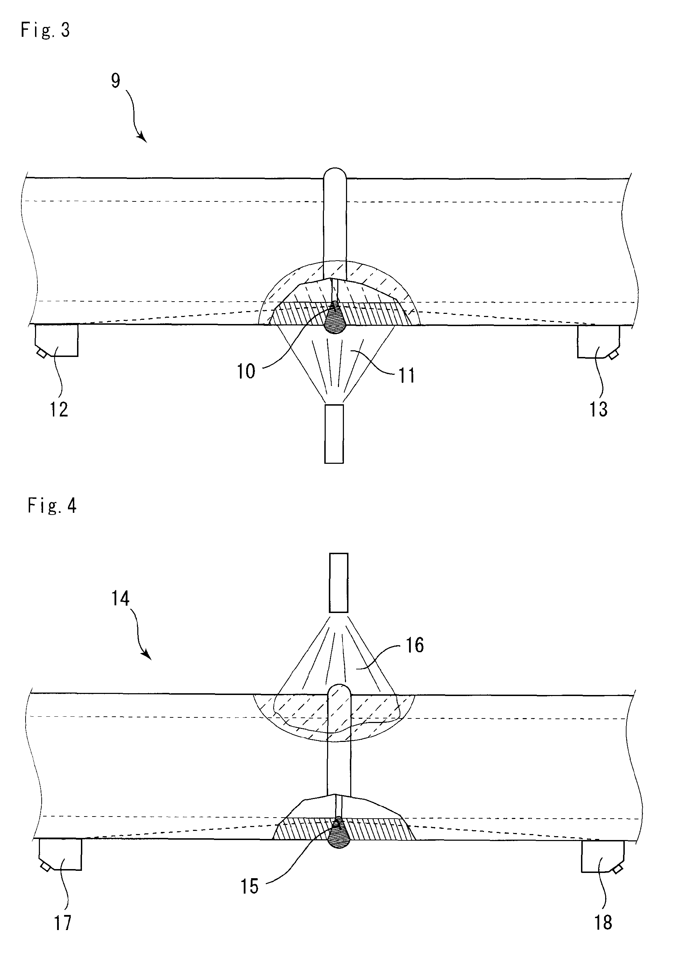

> [Patent Literature 1]
> Japanese Patent Laid-Open No. 2002-267638
> (Paragraph 0013, Fig. 2)
> [Patent Literature 2]
> Japanese Patent Laid-Open No. 09(1997)-297111
> (Paragraph 0023, Fig. 4)

With operation of a machine or a structure, a load is imposed on a pipe or the like, resulting in that cracking of the pipe becomes open and larger. Conversely, during inspection which is performed with operation OFF, cracking is usually closed due to the absence of load. Closure of fatigue cracking is well known, and also in stress corrosion cracking, an oxide present between mating crack surfaces causes closure of the cracking. Very small cracking, which is important from the standpoint of detecting cracking in an early stage, is likely to be strongly closed in comparison with large cracking.

However, in Patent Literature 1, an echo of ultrasonic wave is used to detect cracking, so when a portion to be inspected is inspected, closed cracking gives an erroneous evaluation that smaller cracking than the actual cracking is present; besides, there is the possibility that the cracking will not be detected. Thus, it becomes difficult to detect cracking or make evaluation of an exact size, making it impossible to effect a highly accurate inspection.

In Patent Literature 2, X-ray is used to detect cracking. X-ray is useful in detecting open cracking having a volume, but since the volume of closed, small cracking is extremely small, a change in attenuation of X-ray as a difference between a sound portion and a cracked portion is difficult to appear and thus it is difficult to perform a highly accurate detection or evaluation of cracking.

The present invention has been accomplished taking note of the above-mentioned problems and it is an object of the present invention to provide a quantitative nondestructive evaluation method for cracking which can open closed cracking to detect the cracking or evaluate the size of cracking with a high accuracy.

DISCLOSURE OF THE INVENTION

According to the present invention, for achieving the above-mentioned object, there is provided a quantitative nondestructive evaluation method for detecting cracking present in a metallic pipe by a specified inspection device, which method comprises applying a cooling treatment, a heating treatment, or a cooling and heating treatment to a specified position of the pipe to cause strain so as to open cracking present in the pipe for elicitation and then, in this state, inspecting the pipe with use of the inspection device.

According to this feature, without the need of attaching or removing a mechanical device to or from the pipe, a stress can be imparted to the interior of the pipe by merely applying a thermal change to the pipe from the exterior, and cracking present in the pipe is elicited by the stress, whereby it becomes possible to improve the cracking detecting accuracy and the cracking size evaluating accuracy by the inspection device.

Preferably, the whole sectional area of at least a part of the pipe is cooled to cause strain in the pipe so as to elicit cracking and in this state the pipe is inspected using the inspection device.

By thus cooling the whole sectional area of the pipe, a tensile stress is imposed on the pipe in the longitudinal direction of the pipe, whereby cracking present in the pipe is elicited, so that it becomes possible to improve the cracking detecting accuracy and the cracking size evaluating accuracy by the inspection device.

Preferably, a portion to be inspected of the pipe is cooled and is inspected using the inspection device.

By so doing, a tensile stress acts on the cooled portion and a compressive stress acts on the other portion, so that cracking present in the cooled portion is elicited and it becomes possible to improve the cracking detecting accuracy and the cracking size evaluating accuracy by the inspection device.

Preferably, the other portion of the pipe than the latter portion to be inspected is heated and the portion to be inspected of the pipe is inspected using the inspection device.

By so doing, a compressive stress acts on the heated portion and a tensile stress acts on the other portion, so that cracking present in the portion to be inspected of the pipe is elicited, whereby it becomes possible to improve the cracking detecting accuracy and the cracking size evaluating accuracy by the inspection device. Particularly, as to heating, it basically becomes possible to perform heating at a fairly high temperature until melting of the welded portion and a high stress can be provided.

Preferably, the portion to be inspected of the pipe is cooled, while the other portion than the portion to be inspected of the pipe is heated, and the portion to be inspected of the pipe is inspected using the inspection device.

By so doing, a high temperature difference can be imparted to the pipe and hence the evaluation accuracy is further improved. Besides, the cooled portion to be inspected can be heated immediately and vice versa, so that various portions can be inspected continuously while moving the inspection device, thus contributing to shortening of the inspection time.

Preferably, the heated portion of the pipe is opposed to the cooled portion to be inspected of the pipe with respect to the axis of the pipe.

By so doing, since a tensile stress acts on the cooled portion and a compressive stress acts on the heated portion and since the portions opposed to each other with respect to the axis of the pipe are cooled and heated respectively, a larger stress can be imparted to the portion to be inspected of the pipe, whereby the cracking is more elicited and it becomes possible to improve the cracking detecting accuracy and the cracking size evaluating accuracy by the inspection device.

Preferably, the pipe is inspected using the inspection device in a cooled state of the pipe with liquid nitrogen.

By so doing, not only the use of liquid nitrogen permits the pipe to be cooled to an extremely low temperature in a short time but also a large stress can be exerted on the pipe, whereby the cracking can be elicited in a partially cooled state of the pipe.

BRIEF DESCRIPTION OF THE DRAWINGS

Fig. 1 is a diagram showing a quantitative nondestructive evaluation method for cracking according to a first embodiment of the present invention;
Fig. 2 is a diagram showing a pipe;
Fig. 3 is a diagram showing a quantitative nondestructive evaluation method for cracking according to a second embodiment of the present invention;
Fig. 4 is a diagram showing a quantitative nondestructive evaluation method for cracking according to a third embodiment of the present invention; and

Fig. 5 is a diagram showing a quantitative nondestructive evaluation method for cracking according to a fourth embodiment.

BEST MODE FOR CARRYING OUT THE INVENTION

Embodiments of the present invention will be described hereinunder with reference to the drawings. First, Fig. 1 is a diagram showing a quantitative nondestructive evaluation method for cracking according to a first embodiment of the present invention. The reference numeral 1 denotes a pipe used for example in a power plant, an aircraft or a ship. The pipe 1 comprises stainless steel pipes 2 and 3, the pipes 2 and 3 being welded together to form welded portion 4.

With use of the pipe over many years, cracking 5 is developed in the welded portion 4. The cracking 5 can be detected by nondestructive inspection with inspection devices 6 and 7 using ultrasonic wave. According to the inspection devices 6 and 7 using ultrasonic wave, ultrasonic wave transmitted from a transmitter as the inspection device 6 is reflected in the interior of the pipe 1 and the resulting echo is received by a receiver as the inspection device 7. The cracking 5, which is present in the interior of the pipe 1, can be evaluated on the basis of the waveform of the received echo.

The position of the cracking 5 can be measured from the time required after the transmission of ultrasonic wave until reception thereof. The size of the cracking 5 can be measured from the height of the waveform of the received echo or from a time-of-flight of the echo. However, in the case where the cracking 5 is closed, the waveform of the received echo becomes small and not only the cracking 5 may be judged to be smaller than its actual size, but also the cracking 5 may not be detected.

The aforesaid problem caused by the closed cracking 5 can be solved by opening the closed cracking 5 for elicitation. The cracking 5 can be elicited by subjecting the pipe 1 to a cooling treatment, thereby allowing the volume of the pipe 1 to be contracted and allowing the resulting strain to induce a tensile stress in the interior of the pipe 1, which stress acts so as to open the cracking 5.

For actually inspecting the pipe 1, as shown in Fig. 1, liquid nitrogen 8 is ejected along the outer periphery of a part of the pipe 1 to cool the whole sectional area of the pipe 1. Since the cooled portion of the metallic pipe 1 contracts, a tensile stress acts on the whole of the pipe 1 in the longitudinal direction. With this stress, the cracking 5 is elicited. Generally, in piping laid in a large scale of equipment, pipe bodies 1 are connected continuously and the treatment in question can be carried out assuming that both ends of each pipe 1 are fixed when considered instantaneously.

In the elicited state of the cracking 5, ultrasonic wave is transmitted from the transmitter in the inspection device 6 to the cracking 5 and an echo reflected from the cracking 5 is received by the receiver as the inspection device 7. Since the cracking 5 is elicited, it is possible to improve the accuracy of detecting the cracking 5 and the accuracy of evaluating an actual size of the cracking 5 by the inspection devices.

Next, with reference to Fig. 2, a description will be given about the stress which acts on the pipe 1 when subjected to the cooling treatment. The stress, which is a force acting in the interior of an object, is a force per unit area acting on a section. The stress can be expressed by the following equation:

[Equation 1]

$$Stress = \frac{Force\ applied\ to\ Section}{Sectional\ area}$$

As shown in Fig. 2, when both ends of the pipe 1 having a length of Lo are fixed and the whole sectional area in a section of length $L_1$ of the pipe 1 is cooled, a stress developed for eliciting the cracking 5 is expressed as follows, assuming that Young's modulus is E, linear thermal expansion coefficient is $\alpha$, and a temperature change quantity in the cooled region is $\Delta T$:

[Equation 2]

$$Stress = E\ \frac{\alpha L_1 \Delta T}{L_0}\ ...\ (1)$$

The Young's modulus referred to above, which is one barometer of the hardness of material, stands for a ratio between stress and strain and is a proportional constant of stress relative to strain. Generally, it may be considered that the larger the value of Young's modulus, the harder the material and the larger the force required for deformation. The linear thermal expansion coefficient stands for a property inherent in the material concerned and it represents a deformation quantity when the material temperature rises or drops 1°C. In accordance with the linear thermal expansion coefficient and temperature change quantity there occurs a change in volume such that the material expands when its temperature rises and contracts when its temperature drops.

The cooling region in Fig. 2 may be an arbitrary position of the pipe 1, and when the whole of the pipe 1 is cooled, $L_1=L_0$ and the stress induced is equal to $E\alpha\Delta T$. For example, reference is here made to a stress which is developed when cooling stainless steel. Young's modulus E and linear thermal expansion coefficient $\alpha$ of stainless steel are as follows:

$$E = about\ 21000\ kgf/mm^2$$

$$\alpha = about\ 15 \times 10^{-6}\ [1/°C]\ (a\ value\ at\ 20°C)$$

Therefore, when the whole ($L_1=L_0$) of the pipe 1 formed of stainless steel is cooled, the stress developed can be determined as follows in accordance with the above equation (1):

[Equation 3]

$$Stress = 0.3 \left[ \frac{kgf}{mm^2} \middle/ °C \right] \times \Delta T$$

When the temperature of the whole of the pipe 1 before cooling which is placed at a room temperature of 20°C is 20°C and when it is reduced to 0°C using ice of 0°C, a temperature change quantity is 20°C ($\Delta T = 20$), so that the stress developed in the pipe 1 at this time is as follows:

[Equation 4]

$$Stress = 6\ \frac{kgf}{mm^2}$$

According to the above equation (1), the lower the temperature, the larger the stress developed in the pipe 1 in proportion to the temperature change quantity and it is possible to elicit the cracking 5. Although in the above equation ice is used to cool the pipe 1, liquid nitrogen 8 or the like may be admitted into the pipe 1 or may be ejected to the pipe 1 from the exterior to cool the pipe 1, whereby the value of the temperature change quantity $\Delta T$ can be made large and hence not only a larger stress can be developed in the pipe 1 but also the pipe 1 can be cooled to an extremely low temperature in a short time. In this embodiment the pipe 1 is cooled from the exterior thereof.

In case of cooling the pipe 1 with use of liquid nitrogen 8 or the like, as described above, the whole ($L_1=L_0$) of the pipe 1 may not be needed to be cooled, or even by cooling the pipe 1 partially ($L_1<L_0$) it is possible to produce a stress sufficient to elicit the cracking 5.

Further, in case of cooling the pipe 1 partially ($L_1<L_0$), the position of the cooling region is not specially limited. No matter at which position the cooling region may lie in the portion where the cracking 5 is present, e.g., on the left or right side in the longitudinal direction of the pipe 1 in Fig. 2, it is possible to obtain the same effect. In case of actually cooling piping or the like in a machine or a structure, a suitable position may be cooled and thus the cooling work for inspection is easy.

Although the pipe 1 fixed at both ends thereof has been described above in connection with Fig. 2, the pipe 1 actually used in a machine or a structure is not always fixed at both ends thereof. However, in the case of the present invention, such an instantaneously and extremely naturally restoring treatment as a thermal change is used and the inspection work can be done in a short time. Besides, since minimum equipment suffices, it is not necessary to perform such field works as device mounting, assembling and removing works.

Next, with reference to Fig. 3, a description will be given about a quantitative nondestructive evaluation method for cracking according to a second embodiment of the present invention. Although in the above first embodiment the whole sectional area of the pipe 1 is cooled, even by a partial cooling treatment for a section of a pipe 9 it is possible to develop a stress sufficient to elicit cracking 10.

First, liquid nitrogen 11 is ejected to a portion to be inspected of the pipe 9 to cool the said portion. The cooled portion contracts and a tensile stress is induced in the interior of the cooled portion, while a compressive stress is developed in a pipe portion which is opposed to the to-be-inspected portion with respect to the axis of the pipe 9.

With such stresses, it is possible to elicit the cracking 10 present in the portion to be inspected and hence possible to improve the accuracy of detecting the cracking 10 and the accuracy of evaluating the size of the cracking 10 by inspection devices 12 and 13. In the case of this cooling treatment, it is effective to set a cooling region of the pipe 9 in an angular range of about 90° or less in the circumferential direction from the portion to be inspected and in the lower half of the pipe 9 in Fig. 3.

Next, with reference to Fig. 4, a description will be given about a quantitative nondestructive evaluation method for cracking according to a third embodiment of the present invention. Although in the above second embodiment the portion to be inspected of the pipe 9 is cooled to develop a stress, no limitation is made thereto, but also by heating a pipe 14 it is possible to produce a stress sufficient to elicit cracking 15.

First, conversely to the above second embodiment, a heat treatment is performed by ejecting steam 16 to a portion of the pipe 14 which portion is opposed to a portion to be inspected of the pipe 14 with respect to the axis of the pipe, with the result that the heated portion expands and a compressive stress is created in the interior of the heated portion, while a tensile stress is produced in the portion to be inspected.

With such stresses, it is possible to elicit the cracking 15 present in the portion to be inspected and hence possible to improve the accuracy of detecting the cracking 15 and the accuracy of evaluating the size of the cracking 15 by inspection devices 17 and 18. In the case of this heating treatment, it is effective to set a heating region of the pipe 14 in an angular range of about 90° or more in the circumferential direction from the portion to be inspected and in the upper half of the pipe 14 in Fig. 4.

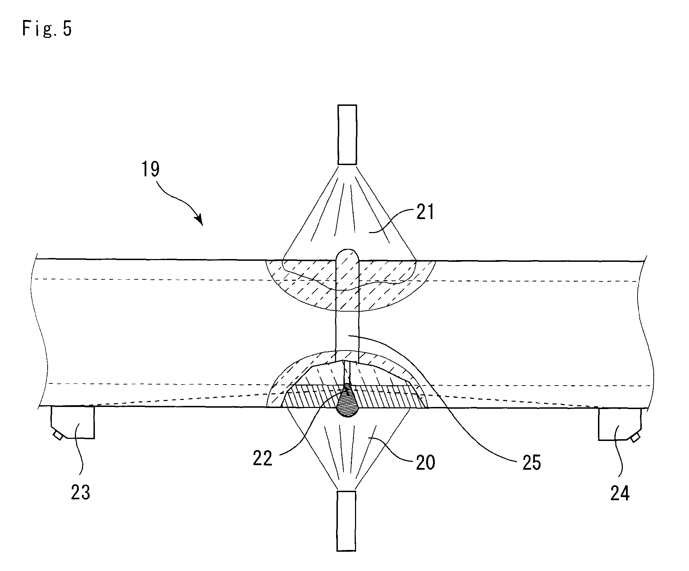

Next, with reference to Fig. 5, a description will be given about a quantitative nondestructive evaluation method for cracking according to a fourth embodiment of the present invention. Both cooling and heating treatments described above may be conducted at a time.

First, liquid nitrogen 20 is ejected to a portion to be inspected of a pipe 19 and at the same time steam 21 is ejected to a portion of the pipe 19 which portion is opposed to the portion to be inspected of the pipe 19 with respect to the axis of the pipe. The cooled portion contracts and a tensile stress is created in the interior of the cooled portion, while the heated portion expands and a compressive stress is produced in the interior of the heated portion.

Since the portions opposed to each other with respect to the axis of the pipe 19 are thus cooled and heated respectively, a larger stress can be imparted to the portion to be inspected, whereby cracking 22 present in the portion to be inspected is elicited to a greater extent. Consequently, it is possible to further improve the accuracy of detecting the cracking 22 and the accuracy of evaluating the size of the cracking 22 by inspection devices 23 and 24.

Thus, by conducting both cooling and heating at a time, the cooled portion to be inspected can be heated immediately after inspection, so that it is possible to immediately change from one to another portion to be inspected without waiting for natural return of the temperature of the cooled portion to the original temperature, thus making it possible to shorten the inspection time.

Therefore, when inspecting a welded portion 25 of the pipe 19, the portions to be subjected to ejection of liquid nitrogen 20 and steam 21 are moved under rotation around the outer periphery of the welded portion 25, whereby the portion to be inspected can be changed from one to another successively while repeating the cooling and heating treatment. Thus, it becomes possible to inspect the welded portion 25 of the pipe 19 in a continuous manner.

Now, with reference to Fig. 5, a more detailed description will be given about the thus cooled and heated pipe 19. The heated portion of the cooled and heated pipe 19 expands, while the cooled portion thereof contracts, and the cracking 22 in the cooled portion becomes more elicited because of a stress balance.

Thus, the cracking 22 present in the cooled portion of the pipe 19 is opened, so that not only the cracking 22 becomes easier to be found out by the inspection devices 23 and 24 but also it becomes possible to measure the actual size of the cracking 22.

Various methods are available for imparting a stress to the pipe, but in the quantitative nondestructive evaluation method for cracking according to the present invention strain is developed in the pipe by subjecting the pipe to a cooling treatment, a cooling and/or heating treatment, or a combination of both cooling and heating treatments. Therefore, not only a stress can be imparted to the pipe without using any jig or the like, but also the inspection work can be done easily because the temperature of the pipe returns naturally to its original temperature by stopping the heating treatment after inspection.

Although embodiments of the present invention have been described above with reference to the drawings, concrete constructions of the present invention are not limited to the above embodiments, but changes and additions falling under the scope not departing from the gist of the present invention are also included in the present invention.

For example, although in the above embodiments liquid nitrogen is used for cooling the pipe, no limitation is made thereto. Even if liquid helium, liquid oxygen, or liquid air is used, the same effects as above can be expected.

Although in the above embodiments steam is used for heating the pipe, no limitation is made thereto. For example, a heating element which utilizes the generation of heat of an electric resistance, a laser, or a gas burner is also employable for heating the pipe.

Although the ultrasonic inspection devices used in the above embodiments comprise two inspection devices which are a transmitter and a receiver, no limitation is made thereto. One or three or more ultrasonic inspection devices may be used insofar as both transmission and reception can be effected. Moreover, various angles may be adopted as incidence angles of ultrasonic wave. Thus, it is self-evident that various inspection devices are applicable to the present invention.

Further, although the inspection devices used in the above embodiments employ ultrasonic wave for inspection, no limitation is made thereto, but, for example, X-ray inspection technique, magnetic leakage flux inspection technique, eddy current inspection technique, and other inspection techniques are also employable.

**Claims**

1. A quantitative nondestructive evaluation method for cracking, using a specified inspection device to detect cracking present in a metallic pipe, which method comprises applying a cooling treatment, a heating treatment, or a cooling and heating treatment to a specified position of said pipe to cause strain so as to open cracking present in said pipe for elicitation and then, in this state, inspecting said pipe with use of said inspection device.

2. A quantitative nondestructive evaluation method for cracking according to claim 1, wherein the whole sectional area of at least a part of said pipe is cooled to cause strain in the pipe so as to elicit the cracking and in this state the pipe is inspected using said inspection device.

3. A quantitative nondestructive evaluation method for cracking according to claim 1, wherein a portion to be inspected of said pipe is cooled and is inspected using said inspection device.

4. A quantitative nondestructive evaluation method for cracking according to claim 1, wherein the other portion of said pipe than a portion to be inspected of the pipe is heated and the portion to be inspected of said pipe is inspected using said inspection device.

5. A quantitative nondestructive evaluation method for cracking according to claim 1, wherein a portion to be inspected of said pipe is cooled, while the other portion than the portion to be inspected of said pipe is heated, and the portion to be inspected of said pipe is inspected using said inspection device.

6. A quantitative nondestructive evaluation method for cracking according to claim 5, wherein the heated portion of said pipe is a portion opposed to the cooled portion to be inspected of said pipe with respect to the axis of the pipe.

7. A quantitative nondestructive evaluation method according to any of claims 1, 2, 3, 5 and 6, wherein said pipe is inspected using said inspection device in a state in which said pipe is cooled with liquid nitrogen.

Fig. 1

Fig. 2

Fig. 3

Fig. 4

Fig. 5

## INTERNATIONAL SEARCH REPORT

| International application No. |
| --- |
| PCT/JP2004/002582 |

**A. CLASSIFICATION OF SUBJECT MATTER**
   Int.Cl$^7$  G01N29/10, G01N23/18, G01N27/82

According to International Patent Classification (IPC) or to both national classification and IPC

**B. FIELDS SEARCHED**

Minimum documentation searched (classification system followed by classification symbols)
   Int.Cl$^7$  G01N29/00-29/28, G01N23/18, G01N27/82-27/90,
         G01N21/88-21/958, G01N27/20

Documentation searched other than minimum documentation to the extent that such documents are included in the fields searched
   Jitsuyo Shinan Koho           1922-1996   Toroku Jitsuyo Shinan Koho   1994-2004
   Kokai Jitsuyo Shinan Koho   1971-2004   Jitsuyo Shinan Toroku Koho   1996-2004

Electronic data base consulted during the international search (name of data base and, where practicable, search terms used)
   JICST FILE(JOIS)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y | JP 61-296264 A  (Mitsubishi Heavy Industries,<br>Ltd.),<br>27 December, 1986 (27.12.86),<br>Full text; Figs. 1 to 3<br>(Family: none) | 1,4<br>2,3,5-7 |
| Y | JP 7-218411 A  (Kabushiki Kaisha Onosokuki),<br>18 August, 1995 (18.08.95),<br>Column 4, lines 16 to 25<br>(Family: none) | 2,3,5-7 |
| P,X<br>P,Y | Masumi SAKA, 'Kiretsu no Teiryoteki Hihakai<br>Hyoka-Tojita Kiretsu ni Chumoku shite-',<br>Hihakai Kensa, 01 November, 2003 (01.11.03),<br>Vol.52, No.11, pages 596 to 599 | 1-3<br>4-7 |

☐  Further documents are listed in the continuation of Box C.      ☐  See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 12 May, 2004 (12.05.04) | 25 May, 2004 (25.05.04) |

| Name and mailing address of the ISA/<br>   Japanese Patent Office | Authorized officer |
| --- | --- |
| Facsimile No. | Telephone No. |

Form PCT/ISA/210 (second sheet) (January 2004)